# EUROPEAN PATENT APPLICATION

(11) **EP 1 821 400 A1**
(43) Date of publication of application: **22.08.2007**
(21) Application number: 06003295.0
(22) Date of filing: 17.02.2006
(51) Int. Cl.: H02P 3/06

(54) **A system for providing three-phase current to an electric motor**

(71) Applicant: SIEMENS AKTIENGESELLSCHAFT, 80333 München (DE)
(72) Inventor: Kreutzer, Rainer, 92637 Weiden (DE); Seitz, Johann, 92224 Amberg (DE)

(57) **Abstract**

A system (200) comprising a motor starter unit (250) and a contactor unit (210) connectable in series to provide three-phase current to an electric motor (M), the contactor unit (210) comprising a first and a second control terminal (A1, A2) adapted to provide a voltage over actuation means (131) adapted to move movable contact pieces (104) for making or breaking a contact to responsive stationary contact pieces (104A) in said contactor unit (210) to switch the three phases. The system (200) further comprises a voltage supply means (230; K, 201a, 230A) adapted to provide voltage over said actuation means (131) via a secondary current path (201) after voltage drop between said first and second control terminal (A1, A2) to smoothen rundown of said electric motor (M).

## Description

### Field of the invention

The invention relates to systems for providing three-phase current to an electric motor, in particular to systems according to the preamble of the independent patent claim.

### Background art

In low voltage switching technology, devices like circuit breakers, contactors or motor starter units are commonly used. A circuit breaker provides mechanical galvanic isolation of contacts against abnormal operation contacts, such as protection against overload and short circuits. A contactor is used to switch galvanic contacts in response to operating conditions. A motor starter unit is an electronic switching point, usually comprising a thyristor switch unit, for performing switching in response to operating conditions without galvanic isolation, and it can be used for smooth starting and running down of an electrical motor.

Traditionally, these devices are built modularly and independently of each other. The separate modules can be brought together when required.

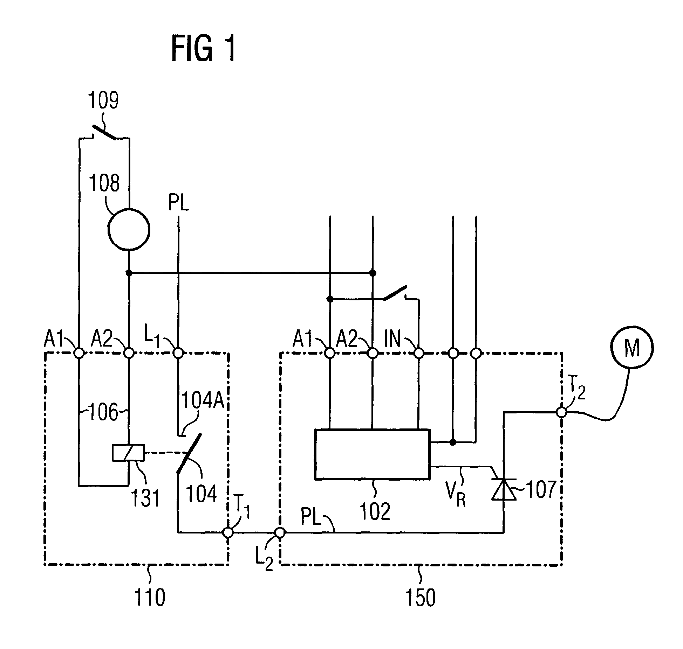

An emerging trend is that above functionalities can be combined within one unit. Figure 1 shows a state-of-the art system for providing three-phase current to an electric motor. The electric motor M gets its operating power through the three phase lines of a power circuit PL that is passed first through a contactor unit 110 and then through a motor starter unit 150. Each of the phases of the power circuit PL is connected to responsive input terminal L1 of the contactor unit 110. Each of the output terminals T1 of the contactor unit 110 is then connected to responsive input terminal L2 of the motor starter unit 150, the output terminals T2 of which are connected to the electric motor M.

The control terminals A1, A2 of the contactor unit 110 are connectable to a voltage supply 108. In order to control the state of the contactor unit 110, there is preferably a switch 109 provided between the voltage supply 108 and one of the control terminals A1, A2.

The control terminals A1, A2 are connected, e.g. by means of wiring 106, to actuating means 131 that are adapted to move the movable contacts to or from the stationary contacts, thereby contacting or separating the input terminals L1 from the output terminals T1 of the power circuit PL for each phase, in other words to contact or break a contact point in the power circuit PL by moving a movable contact 104 to or from at least one stationary contact 104A for each phase.

The control terminals A1, A2 of the contactor unit 110 may be electrically connected to control terminals A1, A2 of the motor starter unit 150, so that also the motor starter unit 150 can be switched off by turning the switch 109. The motor starter unit 150 preferably has its own control means (not shown in Fig. 1) to control running up and down of the electric motor M, i.e. to control the operation of the thyristor switch unit 107. The motor starter unit 150 is preferably adapted may be adapted to obtain its operating power from a separate power supply terminals IN that may be connected to the voltage supply 108.

### Summary of the invention

If an electric motor that is powered through a system for providing three-phase current according to prior art is run down by using the switch 109 used to control the contactor unit 110 to switch the three phases, the actuation means 131 of the contactor unit 110 are deactivated abruptly. In response to a drop of the control voltage between the control terminals A1, A2, the contactor unit 110 breaks the contact point, and the motor starter unit 150 sets the thyristor switch unit 107 to a high-resistance state. It follows that the electric motor M will not be switched off smoothly. To have a smooth rundown would nevertheless be important, since the mechanical stress to the mechanical parts of the electric motor and of the installation and electrical disturbances to the supply network may cause damages.

An objective of the invention is therefore to improve a system for providing three-phase current to an electric motor comprising a motor starter unit and a contactor unit that are connectable in series for providing three-phase current to an electric motor, the contactor unit comprising a first and a second control terminal adapted to provide a voltage over actuation means adapted to move movable contact pieces for making or breaking a contact to responsive stationary contact pieces in said contactor unit to switch the three phases, to enable a smoother rundown of the electric motor also in case when the control voltage of the contactor unit is switched off when the electric motor is running.

This objective can be achieved by providing the system with a voltage supply means adapted to provide a voltage over said actuation means via a secondary current path after voltage drop between said first and said second control terminals to smoothen rundown of said electric motor.

The dependent claims describe various advantageous aspects of the invention.

### Advantages of the invention

By having the actuation means of the contactor unit actuated also after the voltage between the control terminals of the contactor unit has dropped, the running down of the electric motor can be smoothened since the power circuit will not be cut off abruptly but can be run down using a rundown function of the motor starter unit.

Advantageously, the system further comprises a monitoring unit adapted to control said voltage supply means, since then the deactivating or activating of the actuation means may be performed automatically. Even better, said monitoring unit can be adapted to disconnect said voltage supply means from said activation means in response to the monitoring unit reaching a predefined state.

If said predefined state indicates that a motor rundown function in said motor starter unit has been completed, an abrupt power break in the supply line of the electric motor can be avoided and the electric motor can be run down using the run down function by the motor starter unit.

If the monitoring unit is adapted: i) to monitor the voltage between said first and second control terminals and ii) upon drop of the voltage between said first and second control terminals, to start a motor rundown function in the motor starter unit for running down said electric motor, the running down does not need to be separately activated in the motor starter unit. Especially, this can be achieved while possibly existing cabling from the voltage supply to the contactor unit may be used.

Said monitoring unit may be integrated in said motor starter unit, thereby reducing the number of different units in the control cubicle.

### List of drawings

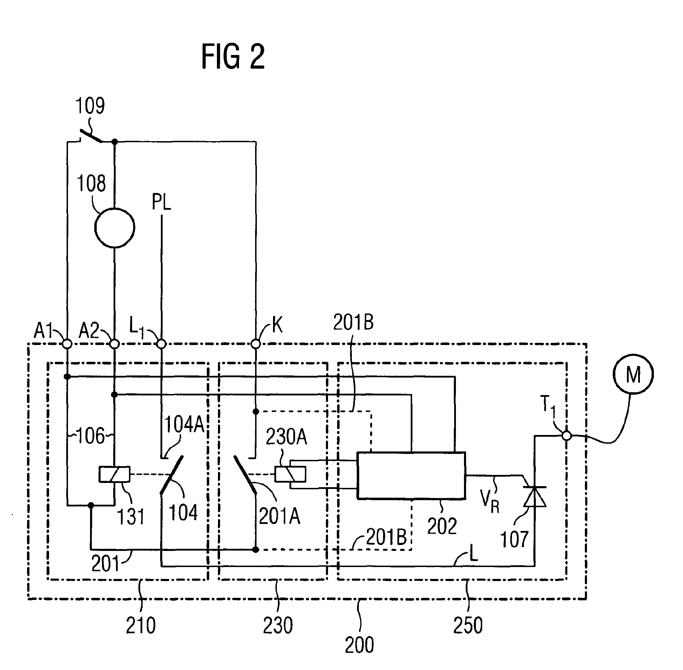

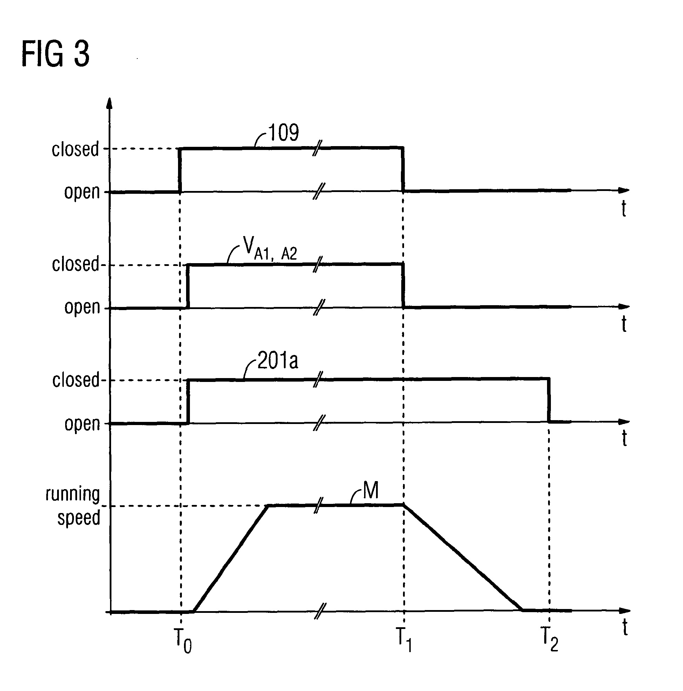

In the following, an embodiment of the invention is discussed in more detail with reference to Figures 2 and 3 in the accompanying drawings, of which:
Figure 1 shows state-of-the art system for providing three-phase current to an electric motor;
Figure 2 shows the inventive system for providing three-phase current to an electric motor; and
Figure 3 illustrates the running speed of the electric motor and the switch positions or voltages.

Same reference symbols refer to similar structural elements throughout the Figures.

### Detailed description

Figure 2 shows a system 200 comprising a motor starter unit 250 and a contactor unit 210 connectable in series to provide three-phase current to an electric motor M.

The motor starter unit 250 comprises a control unit 202 and a switch unit 107 that is preferably a thyristor switch unit. The motor starter unit 250 gets its operation power from the voltage supply 108 through a supply line 205 that is connectable to the power input K.

The contactor unit 210 comprises actuating means 131 for making or opening the electrical contact on the power circuit PL between both sides of the break point formed by the movable contact pieces 104 and the stationary contact pieces 104a.

The actuating means 131 preferably comprise an electromagnetic actuator having a magnetic yoke and at least one coil that is suitable to be energized during operation. For this purpose, the contactor unit 210 comprises a first and a second control terminal A1, A2, that are both connectable to a voltage supply 108, preferably through a switch 109.

Upon actuation of the electromagnetic coil, the magnet field causes a force to an armature and pulls it towards the magnetic yoke, loading a return spring and causing one or more movable contacts of each phase to contact at least one respective fixed contact, thereby connecting the in and out terminals of all three phases.

When the coil is not energized, the loaded return spring pushes the armature back which then moves the one or more movable contacts back and thereby opens the contact between the in and out terminals of all three phases.

The first and the second control terminals A1, A2 may be directly connected or connectable to the motor starter unit 250. In this manner the motor starter unit 250 may monitor the control voltage between the control terminals A1 and A2 of the contactor unit 210.

The dedicated monitoring unit or the control unit 202 of the motor starter unit 250 may be adapted to control the relay 230A adapted to open or close a switch 201a to connect said secondary current path 201 to a further terminal K in the system 200. The further terminal K is advantageously a terminal connected to the motor starter unit 250 for providing operating power for it.

The system 200 preferably comprises a supplementary voltage supply block 230 that can be used to activate the activation means 131. According to one aspect of the invention, the supplementary voltage supply block 230 comprises a power input K of the motor starter unit 250 that is connectable by a switch 201a, controlled by relay 230A that is controllable by the motor starter unit 250, to a supply line 201B leading to the actuating means 131. In the motor starter unit 250, advantageously the control unit 202 may be adapted to control the switch 201a. Similarly, the control unit 202 may be adapted to monitor the voltage over the supply line 201B and control terminal A2, i.e. the voltage over the actuation means 131.

Instead of using the power input K and the motor starter unit 250, the supplementary voltage supply block 230 may be carried out using a separate circuitry, such as a dedicated monitoring circuit.

Instead of having the secondary current path 201 switched by the relay 230A and switch 201, any other devise suitable for this purpose may be used; especially the switching may be carried out using at least one transistor or thyristor controllable by the motor starter unit 250 or the control unit 202.

The supplementary voltage supply block 230 is adapted to set an electric voltage over the actuation means 131 via a secondary current path 201 after voltage drop between said first and second control terminal A1, A2 to smoothen rundown of the electric motor M.

Preferably, the relay 230A is switched off as soon as the running down function in the motor starter unit 250 has been completed. During the running down function, depending on the implementation of the motor starter unit 250, current may be conducted through the thyristor switch unit 107 by using phase-fired control. The settings of the running down function can be parameterized to have a predefined running down time. If the electric motor M has not been brought to a halt at the lapse of the predefined running down time does not matter, since it can be assumed that the electric motor has decelerated enough.

In particular, if the motor starter unit 250 comprises a thyristor switch unit 107 and a control unit 202, the predefined state may indicate that the thyristor switch unit 107 has been adapted to supply the electric motor M electric power that is below a predefined rundown threshold.

Instead of the condition that the running down function has been completed, the switching off may be performed upon reaching any other condition as well.

The control unit 202 of the motor starter unit 250, or the dedicated monitoring unit, may be adapted to monitor the voltage between the first and second control terminals A1, A2, and upon drop of the control voltage, to start a motor rundown function in the motor starter unit 250 for running down said electric motor M.

Figure 3 illustrates the running speed of the electric motor M as a function of time. The switch 109 is closed at t=T₀, so that the control voltage over control terminals A1, A2 of the contactor unit 210 is set. At the same time or little later, the switch 201a can be closed, preferably by the dedicated monitoring unit or the control unit 202 of the motor starter unit, upon detection of the voltage over the control terminals A1, A2 and thereby also over the actuation means 131. The motor starter unit 250 controls firing of the switch unit that is preferably a thyristor switch unit 107 so that a desired running speed of the motor is obtained.

At time t=T₁, the switch 109 is opened. At the same time, the control voltage over control terminals A1, A2 disappears. But because the switch 201a is closed, the coil in the actuation means 131 is still energized and thereby the power circuit PL will not be broken.

After the dedicated monitoring unit or the control unit 202 reaches a predefined state, such as by triggered by the motor control unit 250 indicating that the electric motor M has been run down, or that a run-down function of the motor control unit 250 has been completed (at t=T₂) the switch 201 is opened preferably by the dedicated monitoring circuit or the control circuit 202.

## Claims

1. A system (200) comprising a motor starter unit (250) and a contactor unit (210) connectable in series to provide three-phase current to an electric motor (M), the contactor unit (210) comprising a first and a second control terminal (A1, A2) adapted to provide a voltage over actuation means (131) adapted to move movable contact pieces (104) for making or breaking a contact to responsive stationary contact pieces (104A) in said contactor unit (210) to switch the three phases, **characterized in that**: the system (200) further comprises a voltage supply means (230; K, 201a, 230A) adapted to provide voltage over said actuation means (131) via a secondary current path (201) after voltage drop between said first and second control terminal (A1, A2) to smoothen rundown of said electric motor (M).

2. A system (200) according to claim 1, further comprising: a monitoring unit (202) adapted to control said voltage supply means (230; K, 201a, 230A).

3. A system (200) according to claim 2, wherein: said monitoring unit (202) is adapted to disconnect said voltage supply means (230; K, 201a, 230A) from said actuation means (131) in response to the monitoring unit (202) reaching a predefined state.

4. A system (200) according to claim 3, wherein: said predefined state indicates that a motor rundown function in said motor starter unit (250) has been completed.

5. A system (200) according to claim 3 or 4, wherein: said monitoring unit (202) is adapted: i) to monitor the voltage between said first and second control terminals (A1, A2) and ii) upon drop of the voltage between said first and second control terminals (A1, A2), to start a motor rundown function in the motor starter unit (250) for running down said electric motor (M).

6. A system (200) according to any one of claims 3 to 5, wherein: said monitoring unit (202) is integrated in said motor starter unit (250).

7. A system (200) according to claim 6, wherein: said motor starter unit (250) comprises a thyristor switch unit (107) and a control unit (202), and wherein: said predefined state indicates that the thyristor switch unit (107) is adapted to supply the electric motor (M) electric power that is below a predefined rundown threshold.

8. A system (200) according to any one of claims 2 to 7, wherein: said motor starter unit (250) and said contactor unit (210) are integrated within one device unit.

9. A system (200) according to any one of claims 2 to 8, wherein: the monitoring unit (202) is adapted to control a relay (230A) adapted to open or close a switch (201a) to connect said secondary current path (201) to a further terminal (K) in the system (200).

10. A system (200) according to claim 9, wherein: said further terminal (K) is a terminal connected to said motor starter unit (250) for providing operating power for said motor starter unit (250).
